**Europäisches Patentamt**

**European Patent Office**

**Office européen des brevets**

(11) Veröffentlichungsnummer: **0 086 339**
**A2**

(12) # EUROPÄISCHE PATENTANMELDUNG

(21) Anmeldenummer: **83100339.7**

(51) Int. Cl.³: **G 01 S 7/52, G 01 N 29/04**

(22) Anmeldetag: **17.01.83**

(30) Priorität: **11.02.82 DE 3204797**

(43) Veröffentlichungstag der Anmeldung: **24.08.83**
**Patentblatt 83/34**

(84) Benannte Vertragsstaaten: **FR GB IT SE**

(71) Anmelder: **Nukem GmbH, Rodenbacher Chaussee 6 Postfach 11 00 80, D-6450 Hanau 11 (DE)**

(72) Erfinder: **Sternberg, Walter, Hohe Mark Strasse 21, D-8755 Alzenau 3 (DE)**
Erfinder: **Schreyer, Fritz, Felgenstrasse 27, D-6456 Langenselbold (DE)**
Erfinder: **Ruth, Ursula, geb. Orthen, Gartenstrasse 13, D-6451 Ronneburg 1 (DE)**

(74) Vertreter: **Stoffregen, Hans-Herbert, Dr. Dipl.-Phys., Patentanwälte Strasse & Stoffregen Am Markt 11, D-6450 Hanau/Main 1 (DE)**

(54) Verfahren zum Unterscheiden zwischen Störsignalen und Werkstückfehlersignalen bei der Ultraschallprüfung.

(57) Zum sicheren Unterscheiden von von in einem Ankopplungsmedium vorhandenen Störvolumina, wie zum Beispiel Luftblasen (18), hervorgerufenen (Stör-) Signalen zu von Werkstückfehlern erzeugten Signalen bei der Ultraschallprüfung von Werkstücken (10) nach dem Impuls-Echo-Verfahren wird vorgeschlagen, daß bei Auftreten eines zwischen Sendeimpuls und Werkstückeintrittsechosignal liegenden eine einstellbare Schwelle überschreitenden Signals während eines Prüftakts sämtliche in den Erwartungsbereich für Werkstückfehler fallende Signale desselben Prüftakts unterdrückt werden.

-1-

NUKEM GmbH
Rodenbacher Chaussee 6
6450 Hanau/Main 11 - Wolfgang

Verfahren zum Unterscheiden zwischen Störsignalen und Werkstückfehlersignalen bei der Ultraschallprüfung

Die Erfindung bezieht sich auf ein Verfahren zum Unterscheiden von von in einem Ankopplungsmedium vorhandenen Störvolumina wie zum Beispiel Luftblasen hervorgerufenen (Stör) Signalen zu von Werkstückfehlern erzeugten Signalen bei der Ultraschallprüfung von Werkstücken nach dem Impuls-Echo-Verfahren.

Der DE-AS 27 04 128 ist ein Verfahren zur dynamischen Unterscheidung zwischen Störanzeigen, die von im Ankopplungsmedium enthaltenen kleinen mediumfremden Volumina, wie schwebender Zunder oder Luftblasen, herrühren, und wirklichen Fehlern im Prüfling bei der Ultraschallprüfung mit einer Relativbewegung zu dem Prüfkopf und Fehler zu entnehmen, bei der die Laufzeiten zwischen Sendeimpuls und nachfolgend empfangenen Signalen verglichen werden, um festzustellen, ob dieses von einer Werkstückfehlstelle oder von einer im Ankopplungsmedium vorhandenen Störvolumen herrührt. Voraussetzung für eine entsprechende Unterscheidung ist, daß das Werkstück in Bezug auf den Prüfkopf gedreht wird, um zwischen beiden eine Relativbewegung zu erhalten, die zu einem Störvolumen im Ankopplungsmedium nicht gegeben ist.

Ein Verfahren und eine Einrichtung zur Verminderung von Scheinanzeigen bei der Ultraschallprüfung in Tauchtechnik beschreibt die

...

DE-OS 29 16 938. Um Störsignale weitgehend zu eleminieren, wird der Ultraschallprüfkopf von einem aus schallabsorbierendem Material bestehenden Schnorchel umgeben, der sich vorzugsweise bis hin zur Prüflingsoberfläche erstreckt. Dadurch ist sichergestellt, daß außerhalb des Schnorchelbereichs vorhandene Störvolumina die Meßergebnisse nicht beeinflussen können. Sind jedoch innerhalb des Schnorchelbereichs Luftblasen oder andere Partikel vorhanden, so können von diesen weiterhin Störsignale erzeugt werden und zu Fehlauswertungen führen. Sofern ein Schnorchelende am Werkstück selbst anliegt, kann dieses nicht in Drehbewegung versetzt werden, was jedoch häufig bei der Ultraschallprüfung erforderlich ist.

Eine Verfälschung von Meßergebnissen kann auch dadurch erfolgen, daß Schallwellen mehrmals zwischen dem Ultraschallprüfkopf und einem Störreflektor hin- und herpendeln, so daß Mehrfachechos entstehen, die in den echte Fehler betreffenden Auswertebereich fallen und somit scheinbare Fehler vortäuschen. Diese Mehrfachechos können nach den zuvor beschriebenen Verfahren nicht ausgeschlossen werden und stellen demzufolge erhebliche Nachteile des Bekannten dar.

Aufgabe der vorliegenden Erfindung ist es, ein Verfahren der eingangs genannten Art derart auszubilden, daß das sichere Erfassen von durch Mehrfachechos hervorgerufenen Störsignale in einem Prüftakt losgelöst von vorhergehenden bzw. nachfolgenden Prüftakten und ohne Verwendung von mechanischen Hilfsmitteln wie zum Beispiel Abschirmelementen ermöglicht wird.

Die Aufgabe wird erfindungsgemäß dadurch gelöst, daß bei Auftreten eines zwischen Sendeimpuls und Werkstückeintrittsechosignal liegenden eine einstellbare Schwelle überschreitenden Signals während eines Prüftakte sämtliche in den Erwartungsbereich für Werkstückfehler fallende Signale des selben Prüftakts unterdrückt werden. Mit anderen

...

Worten dient ein in die Laufzeit des Ultraschallsignals in der Wasserstrecke -also zwischen Sendeimpuls und Eintrittsecho- fallender Impuls als Auslösesignal dafür, daß in den Auswertebereich für Werkstückfehler fallende Signale nicht ausgewertet werden, da ansonsten scheinbare Fehler einer Bewertung unterliegen könnten. Demzufolge kann ohne mechanische Hilfsmittel mit der üblichen Auswerteelektronik für jeden Prüftakt selbst festgestellt werden, ob die im Auswertebereich anfallenden Signale von einem im Werkstück vorhandenen echten Fehler oder von im Ankopplungsmedium vorhandenen Störvolumina stammen.

In eigenerfinderischer Ausgestaltung der Erfindung wird vorgeschlagen, daß die Zeitdauer t zwischen Sendeimpuls und vor Werkstückeintrittsechosignal auftretendem (Stör) Signal bestimmt wird und daß die n x t nach dem Sendeimpuls in den Erwartungsbereich für Werkstückfehler fallenden Signale unterdrückt werden.

Dieser Lösungsvorschlag stellt sicher, daß nur die während eines Prüftakte in den Auswertebereich fallenden Signale unterdrückt werden, die einem Mehrfachecho eines Störers zuzuordnen sind, so daß zeitlich neben diese fallende von einem echten Fehler stammende Impulse weiterhin ausgewertet werden können, wodurch eine noch bessere Werkstückbewertung bei der zerstörungsfreien Werkstoffprüfung gegeben ist.

Die die Erfindung kennzeichnenden Lösungsvorschläge verdeutlichen, daß auf einfache Weise eine sichere Ermittlung von von Mehrfachechos stammenden Impulsen, die in den Auswertebereich fallen, gegeben ist, so daß die Bewertung des zu überprüfenden Werkstücks nicht durch im Ankopplungsmedium vorhandene Störvolumina wie zum Beispiel Luftblasen oder schwebender Zunder verfälscht werden kann.

...

- 4 -

Ein weiterer der erfindungsgemäßen Lehre zu entnehmender Vorteil äußert sich dadurch, daß die in den Auswertebereich fallenden Signale einer Fehlerbewertung nicht unterzogen werden müssen, wenn kein Signal zwischen Sendeimpuls und Eintrittsecho auftritt bzw. durch Einstellen der Verstärkung die gesetzte Schwelle nicht überschreitet. Dagegen muß nach dem Stand der Technik jedes in den Erwartungsbereich fallende Signal mehrfach und in Sequenz auftreten, um es eindeutig einem Fehler zuordnen zu müssen. Die Erfindung erleichtert demzufolge eine Unterscheidung zwischen echten und scheinbaren Werkstückfehlern.

Weitere Einzelheiten, Vorteile und Merkmale der Erfindung werden anhand der Erläuterungen der zeichnerischen Darstellung erkennbar.

Es zeigen:

Fig. 1   ein zu überprüfendes Werkstück mit schematisch dargestellter Ultraschallwelle,

Fig. 2 und 3   Ultraschallbilder im Amplituden/Zeit-Diagramm und

Fig. 4   ein Blockschaltbild.

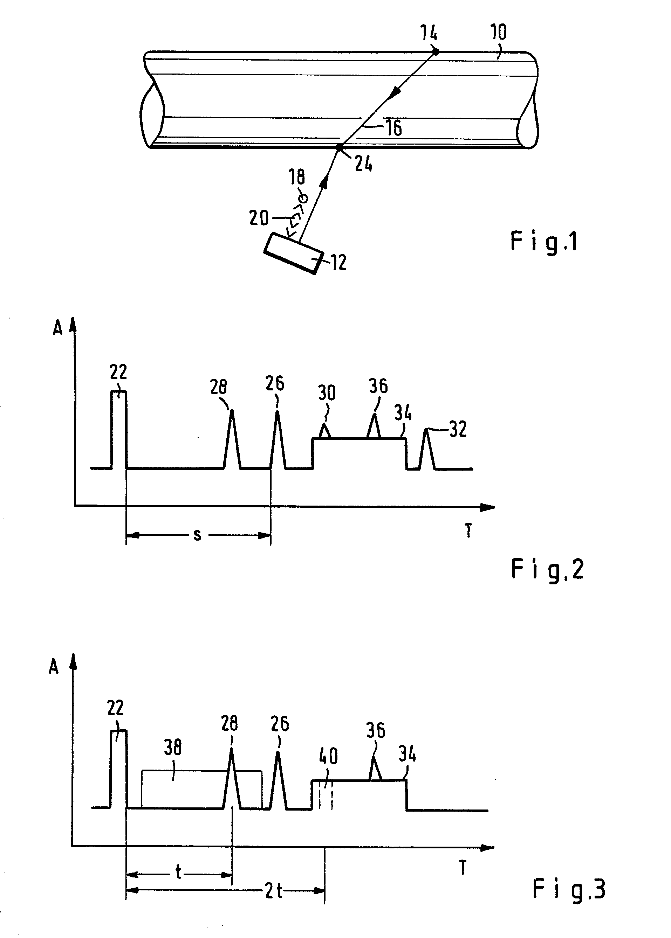

In Fig. 1 ist ein Ausschnitt eines Werkstücks 10 dargestellt, welches durch einen Prüfkopf 12 beschallt wird, wobei die Ankopplung der Schallenergie zum Beispiel über eine Wasserstrecke erfolgen kann. Das Werkstück 12 soll mit einem Fehler 14 behaftet sein, der von einer Ultraschallwelle 16 erfaßt wird. Ferner soll im Ankopplungsmedium ein Störvolumen 18 vorhanden sein, auf das gleichfalls eine Schallwelle 20 trifft, die mehrmals zwischen Prüfkopf 12 und Störvolumen 18 hin- und herlaufen kann.

...

- 5 -

Die Anregung des Ultraschalls wird durch einen in den Fig. 2 und 3 schematisch dargestellten Sendeimpuls 22 ausgelöst. Sobald der Ultraschall auf das Werkstück 10 trifft (mit Bezugszeichen 24 angedeutet) wird ein Teil zum Prüfkopf 12 zurückreflektiert, so daß ein Eintrittsecho 26 im Amplituden-Zeit-Diagramm auftritt. Der Abstand zwischen Sendeimpuls 22 und Eintrittsecho 26 stellt demzufolge die Laufzeit s des Ultraschalls im Ankopplungsmedium dar.

Ein Teil des vom Sendeimpuls 22 angeregten Ultraschalls trifft nun auch auf das Störvolumen 18 -angedeutet durch den Wellenzug 20-, so daß eine Reflexion zum Ultraschallkopf 12 zurückerfolgt. Das diesbezügliche Signal ist im Amplituden-Zeit-Diagramm mit dem Bezugszeichen 28 gekennzeichnet. Zu dem Signal 28 können in Bezug auf den Sendeimpuls 22 im gleichen Abstand weitere Impulse 30, 32 auftreten, die durch das Hin- und Herlaufen von von dem Störvolumen 18 hervorgerufenen Reflexionen zwischen Ultraschallprüfkopf und jenem entstehen.

Die von echten Fehlerstellen im Werkstück 10 hervorgerufenen Impulse fallen nun in einen Auswertebereich 34, wie der Impuls 36 zeigt, der dem Fehler 14 zuzuordnen ist. Treten nun jedoch aufgrund des Störvolumens 18 Mehrfachechos und damit verbundene Impulse 30 auf, so sind im Auswertebereich neben dem einen echten Fehler 14 kennzeichnenden Impuls 36 ein weiterer Impuls 30 festzustellen, der fälschlicherweise gleichfalls als echter Fehler im Werkstück ausgewertet werden kann.

Um dies auszuschließen, findet erfindungsgemäß eine Überwachung von Signalen statt, die während der Laufzeit s eine einstellbare Schwelle 38 überschreiten. Dabei liegt die Zeit, in der die Überwachung stattfindet, zwischen Eintrittsecho und dem der abgefallenen rechten Flanke des Sendeimpulses 22, ist also kleiner/gleich oder s. Wie die

...

- 6 -

Fig. 3 nun verdeutlicht, überschreitet der von dem Störvolumen 18 hervorgerufene Impuls 28 die Schwelle 38. Dies bedeutet für die Auswerteelektronik, daß sämtliche in diesem Prüftakt in den Auswertebereich 34 fallenden Signale nicht weiterverarbeitet werden, um die Bewertung von scheinbaren Schallfehlern auszuschließen.

Alternativ dazu kann das zeitliche Auftreten t des Störimpulses 28 nach dem Sendeimpuls 22 festgestellt und erfaßt werden, um nur den Teil des Auswertebereichs 34 unwirksam zu machen, der einem Vielfachen der Zeit t entspricht. Das bedeutet, daß der Bereich 40 des Auswertebereichs 34 nach Fig. 3 bei der Auswertung unberücksichtigt bleibt, also in diesem Bereich 40 fallende Signale nicht weiterverarbeitet werden, da dieser zeitlich im Bereich nach dem Sendeimpuls 22 liegt. Dahingegen kann das von der Störstelle 14 hervorgerufene Signal 36 der üblichen elektronischen Weiterverarbeitung zugeführt werden.

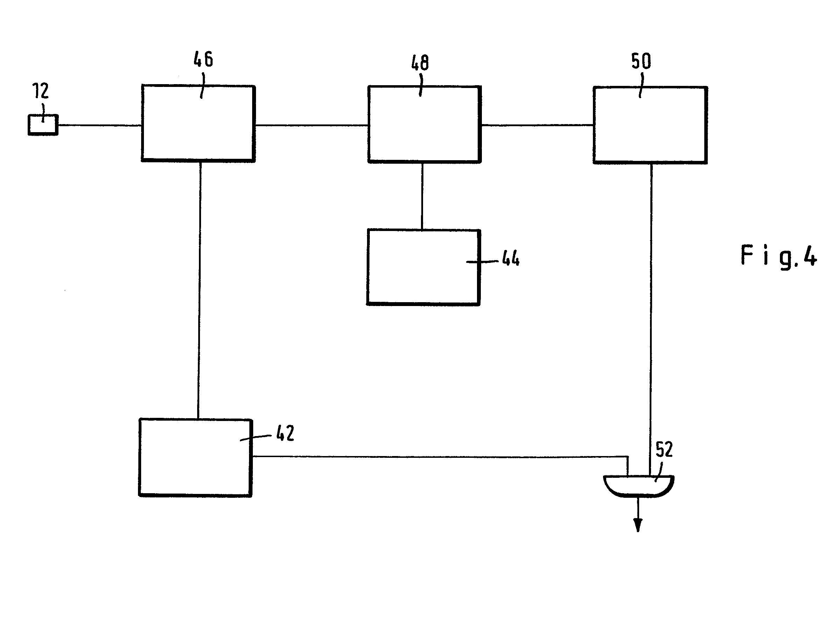

Dem der Fig. 4 zu entnehmenden Blockschaltbild ist eine Auswerteelektronik zu entnehmen, mit Hilfe der die Verarbeitung der echten Störsignale und die Unterdrückung von Scheinsignalen ermöglicht wird.

Die von dem Prüfkopf 12 stammenden Signale werden über einen Verstärker 46 einem Komparator 48 und einem Auswerteglied 42 zugeführt, welches die Blende und Schwelle für den Auswertebereich 34 vorgibt. Sofern die am Komparator 48 anstehenden Signale die einstellbare Schwelle 38 übersteigen und in die Kontrollblende 44 (entspricht Zeitintervall während der Laufzeit s im Ankopplungsmedium) fallen, spricht der Komparator an. Dadurch wird ein Schalter 52 geschlossen, an dem vom Auswerteglied 42 stammende Signale gleichfalls anliegen, damit diese für den anstehenden Prüftakt nicht ausgewertet werden, da es sich dabei um unechte Fehlersignale handeln kann. Über einen Taktgeber 50 können die vom Komparator 48 stammenden Signale gelöscht werden, um die in dem nachfolgenden Prüftakt anfallenden Signale erneut bewerten zu können.

- - - - - - - - - -

NUKEM GmbH
Rodenbacher Chaussee 6
6450 Hanau/Main 11 – Wolfgang

Patentansprüche:

1. Verfahren zum Unterscheiden von von in einem Ankopplungsmedium vorhandenen Störvolumina wie zum Beispiel Luftblasen hervorgerufenen (Stör) Signalen zu von Werkstückfehlern erzeugten Signalen bei der Ultraschallprüfung von Werkstücken nach dem Impuls-Echo-Verfahren,

d a d u r c h   g e k e n n z e i c h n e t,

daß bei Auftreten eines zwischen Sendeimpuls und Werkstückeintrittsechosignal liegenden eine einstellbare Schwelle überschreitenden Signals während eines Prüftakts sämtliche in den Erwartungsbereich für Werkstückfehler fallende Signale desselben Prüftakts unterdrückt werden.

2. Verfahren nach Anspruch 1,

d a d u r c h   g e k e n n z e i c h n e t,

daß die Zeitdauer t zwischen Sendeimpuls und vor Werkstückeintrittsechosignal auftretendem (Stör) Signal bestimmt wird und daß die $n \times t$ nach dem Sendeimpuls in den Erwartungsbereich für Werkstückfehler fallenden Signale unterdrückt werden.

- - - - - - - - - -

Fig.1

Fig.2

Fig.3

Fig.4